# EUROPEAN PATENT APPLICATION

(11) **EP 1 325 822 A1**
(43) Date of publication of application: **09.07.2003**
(21) Application number: 02075062.6
(22) Date of filing: 02.01.2002
(51) Int. Cl.: B60G 21/05, B60G 7/02, B60G 3/26

(54) **Rear suspension for motor vehicles**

(71) Applicant: Messori Engineering s.a.s di Messori P.& C., 10122 Torino (IT)
(72) Inventor: Messori, Pier Paolo, 10025 Pino Torinese (TO) (IT)
(74) Representative: Mittler, Enrico

(57) **Abstract**

The present invention concerns a rear suspension for motor vehicles which comprises a transversal bridge structure (25) fixed to the body (5) of the motor vehicle in an articulated manner along an axis of attachment (24) and, for each wheel (3), an oscillating support arm (22) articulated to the transversal structure (25) by means of a pair of articulation joints (44, 45) which define for said oscillating arm (22) an axis of articulation (23) intersecting horizontally the axis of attachment (24) to the body (5). The oscillating arms (22) are connected to each other by a structure of connecting rods (30, 31, 32) and rocking levers (27, 28) supported by said transversal structure (25) and made so that each variation of the camber and/or convergency of a wheel (3) in presence of rolling (γ) entails a similar variation of convergency and the camber of the other wheel (3).

## Description

The present invention refers to a rear suspension for motor vehicles, in particular a rear mechanical suspension with independent wheels for motor vehicles with front-wheel drive or rear-wheel drive.

For greater clarity we provide the definitions of several terms that are often encountered in the following presentation of the story of the suspensions and of the constructional and functional principles of the present invention.
a) Convergency is the angle formed between the longitudinal axis of the motor vehicle and the axis of the wheel; the convergency is positive when the axes of the wheels converge towards the rear part of the motor vehicle, the convergency is negative when the axes of the wheels tend to encounter each other towards the front part of the motor vehicle.
b) The camber is the angle between the vertical and the axis of the wheel, measured observing the vehicle from the front and with the wheel in running position; the camber is positive if the wheels of a same axle have the upper part outwards inclined, the camber is negative if the wheels of a same axle have the lower part outwards inclined.
c) Understeering is the tendency of the motor vehicle to widen its course.
d) Rolling is the movement of the body along the transversal axis of the vehicle.

A suspension for motor vehicles is the complex of the elastically deformable organs and the connection organs placed between the road and the body of the motor vehicle itself, and can be classified both on the basis of its geometrical arrangement, and on the basis of the type of elastic organ of which it makes use.

There can be rigid axle, oscillating axle, independent wheel and "multilink" geometrical arrangements, while the elastic organs can be leaf springs, helical springs, air springs, rubber springs, nonlinear and/or adjustable deformability springs. Also present are torsion bars, shock absorbers and stabilizers, the so-called antirolling bars.

Motor vehicle suspension has two main objectives: 1) to provide comfortable riding for the passenger by means of effective damping of the unevenness of the road surface; 2) to contribute to ensuring road-holding abilities.

The evolution of the suspension has been up to now directed on one hand towards accomplishing these objectives with greater perfection, on the other hand doing it with the minimum construction and assembly industrial cost.

Nevertheless combining the two objectives that are so opposite, maximum road-holding abilities and maximum comfort, has led the designers of motor vehicles to make suspensions that are increasingly complex, with the use of materials for the execution of the kinematic elements that are more and more expensive, such as aluminum, causing an increase in costs and production times.

Already at the beginning of 1900 designers of motor vehicles, in particular competition vehicles, felt the need to make front suspensions independent from each other.

On production vehicles with front wheels with independent suspensions were introduced after 1920, for example with the Lancia Lambda in 1924.

Nevertheless, as the traction was applied only to the rear wheels, for construction simplicity the most common kinematic arrangement for rear suspension was a rigid axis with leaf springs. This arrangement had the disadvantage of not permitting the variation of the tread of the tyre on the ground when the motor vehicle rolled, and so not increasing the road-holding ability on a curve. This arrangement has extremely high unsuspended masses with a consequent reduction of comfort and road-holding ability.

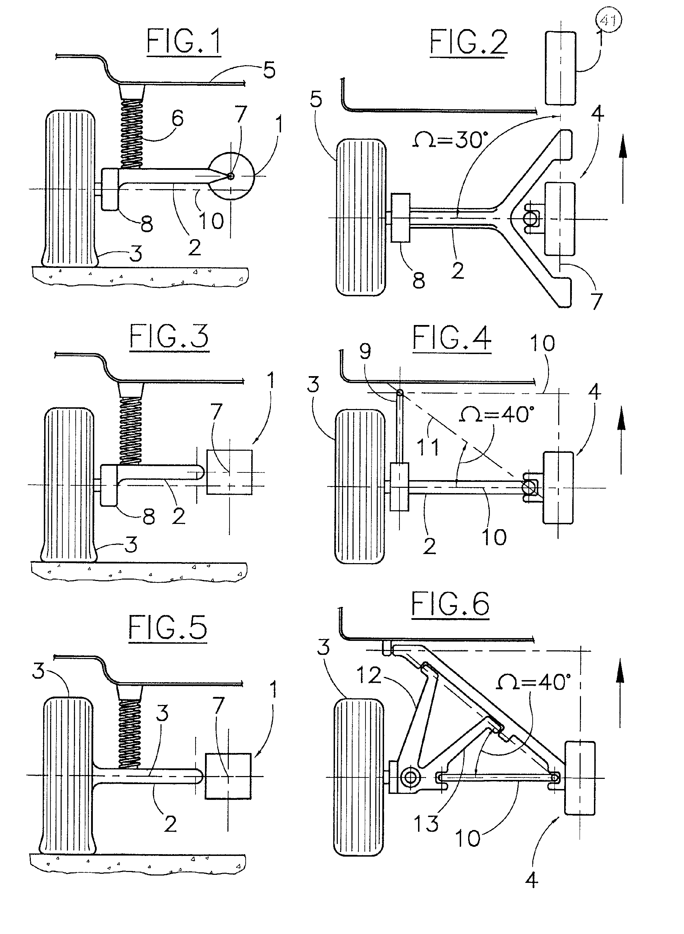

In 1932 Skoda and Tatra succeeded in making the rear driving wheels independent, and in military applications also the front wheels, by means of the suspension diagram shown in Figures 1 and 2, respectively seen from a front elevation and horizontally.

It can be seen in figure 1 that an oscillating arm 2 is linked to the chassis 1 of the motor vehicle, by means of a differential group 4, shown in figure 2, and is capable of transmitting motion to a hub 8 to which a wheel 3 is connected. The articulation axis of the wheel, coinciding with the axis of the driving shaft 7, forms an angle Ω = 90° with said oscillating arm, and thus with the axle 10 of the wheel 3.

The arm 2 is linked to body 5 of the motor vehicle by means of a spring and shock absorber 6 so as to permit a vertical excursion of said arm 2.

Such an arrangement has the disadvantage of greatly varying the camber angle upon the variation of the rolling angle of the motor vehicle.

Successively, in 1936 the company VolksWagen produced its first automobile with independent rear wheels, introducing an important change to the arrangement shown in Figures 1 and 2.

As can be seen in Figures 3 and 4, a tie rod/strut 9 is directed towards the front part of the vehicle, bringing the angle Ω formed between the articulation axis 11 and the axle 10 of the wheel 3 to about 40°.

This independent suspension has the advantage, in comparison to the Skoda arrangement, of better contact with the ground, that is greater tyre/asphalt tread surface, and less variation of the camber angle with the vertical load and/or with the rolling.

Figures 5 and 6 illustrate the arrangement adopted by Fiat on its own motor vehicles, models 600 and 500, produced during the fifties. This arrangement is similar to that shown in Figures 3 and 4 with the difference that the tie rod/strut system is composed of two arms 12 and 13 connected to each other. The merits of the Fiat solution are basically identical to those introduced by the Volkswagen arrangement.

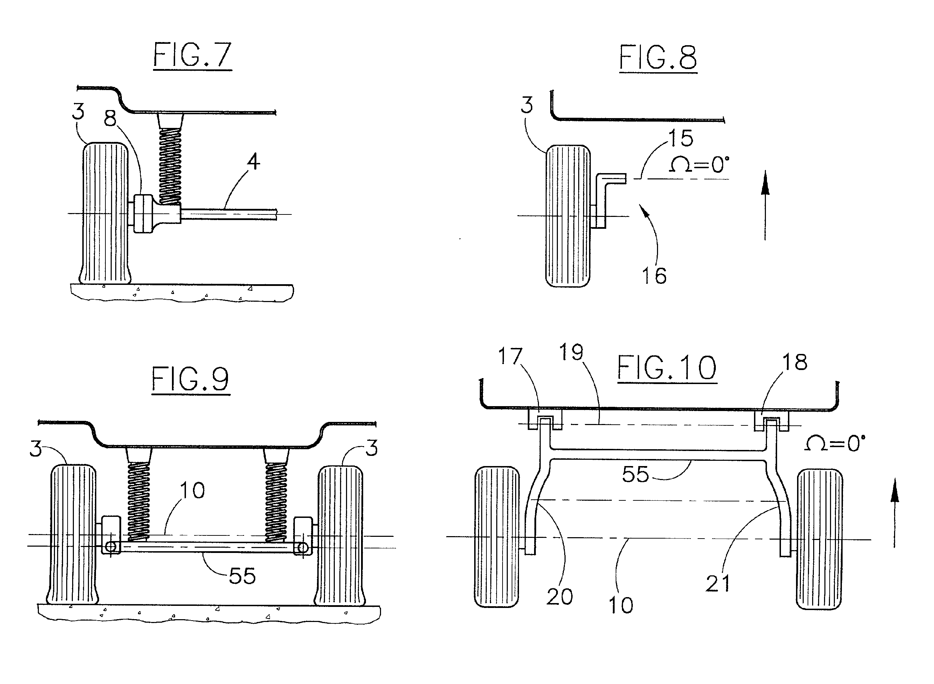

In 1970 Citroen adopted on one of its own motor vehicles a drawn arm arrangement as shown in Figures 7 and 8. In said arrangement a torsion bar spring 14 and an L structure 16 impose an angle Ω equal to 0° on the axis of oscillation 15 of the wheel 3.

This suspension has no variations of the camber and convergency upon variation of the vertical load, while with rolling the camber becomes positive causing a deformation of the tyre such as to reduce the contact surface with the ground and thus to determine a lower road-holding ability.

In 1974 Volkswagen introduced the twisting bridge suspension 55 as shown in Figures 9 and 10.

This arrangement has the advantage of varying very little the camber and convergency angle when the rolling is null and with variations of vertical load; moreover it has only two attachment points 17 and 18 to the body 5, creating an angle Ω equal to 0° between the axle 10 of the wheel 3 and the axis of articulation 19 to the body 5; in addition it has the advantage that it is possible to set the arms 20 and 21 of the bridge structure 55 with fixed angles of camber and convergency so as to have an understeering behavior of the motor vehicle; finally it has the advantage of weighing little and requiring low production and assembly costs.

The disadvantage of this suspension is that with accentuated rolling, that is with a rolling angle near 4°, the tread of the external tyre is reduced with consequent loss of grip.

The importance of having suspension with high values of camber and convergency only in presence of high rolling angles (for example a rolling angle near 4°) results evident to get the most out of today's tyres, which have increasingly lower shoulders and wider tread.

In view of the state of the technique described, the object of the present invention is to make a suspension which combines road-holding needs with the comfort of the passenger and guarantees, in particular, camber and convergency angles dependant only on the rolling angle and not on the load conditions.

Another objective is to make a suspension with low production costs and a simpler assembly.

In accordance with the present invention, said object is reached by means of a rear suspension for motor vehicles characterized in that it comprises a transversal bridge structure fixed to the body of the motor vehicle in an articulated manner along an attachment axis and, for each wheel, an oscillating support arm articulated to said transversal structure by means of a pair of articulation points which define for said oscillating arm an articulation axis intersecting said axis of attachment to the body, said oscillating arms being connected to each other by a connecting rod and rocking lever structure supported by said transversal structure and made so that each variation of the camber and/or convergency of a wheel in presence of rolling entails a similar variation of convergency and camber of the other wheel.

Thanks to the present invention it is possible to make a rear suspension that does not modify the angle values of the camber and the convergency upon variation of the load, while with rolling angles different from zero it modifies the angle values of the camber and the convergency so as to make the suspension understeering.

In addition a rear suspension can be made which has only two points of attachment to the body of the motor vehicle.

In addition a rear suspension can be made which weighs less than the multilink suspensions, in particular than those multilink suspensions having their own suspension structure.

In addition a rear suspension can be made which has a geometry that does not vary in time because of wear or of the articulation bushings collapsing.

The characteristics and advantages of the present invention will result evident from the following detailed description of an embodiment thereof, illustrated as non-limiting example in the enclosed drawings, in which:
Figure 1 shows a front elevation of a suspension of a Skoda vehicle according to the known art;
Figure 2 shows a plan view of the suspension of Figure 1;
Figure 3 shows a front elevation of a suspension of a Volkswagen motor vehicle according to the known art;
Figure 4 shows a plan view of the suspension of Figure 3;
Figure 5 shows a front elevation of a suspension of a Fiat motor vehicle according to the known art;
Figure 6 shows a plan view of the suspension of Figure 5;
Figure 7 shows a front elevation of a suspension of a Citroen motor vehicle according to the known art;
Figure 8 shows a plan view of the suspension of Figure 7;
Figure 9 shows a front elevation of a suspension of a Volkswagen motor vehicle according to the known art;
Figure 10 shows a plan view of the suspension of Figure 9;
Figure 11 shows a front elevation of a suspension according to the present invention;
Figure 12 shows a plan view of the suspension of Figure 11;
Figure 13 shows a side view of the suspension of Figure 11;
Figure 14 shows in the form of a diagram a variant of the kinematic motion of the suspension according to the present invention;
Figure 15 shows in the form of a diagram the kinematic motion of another embodiment of the present invention;
Figure 16 shows a rear schematic drawing of a motor vehicle equipped with the suspension according to the present invention;
Figure 17 shows a schematic drawing of the plan of the motor vehicle of Figure 16;
Figure 18 shows a first numeric simulation of the operating of the suspension according to the present invention;
Figure 19 shows a second numeric simulation of the operating of the suspension according to the present invention.

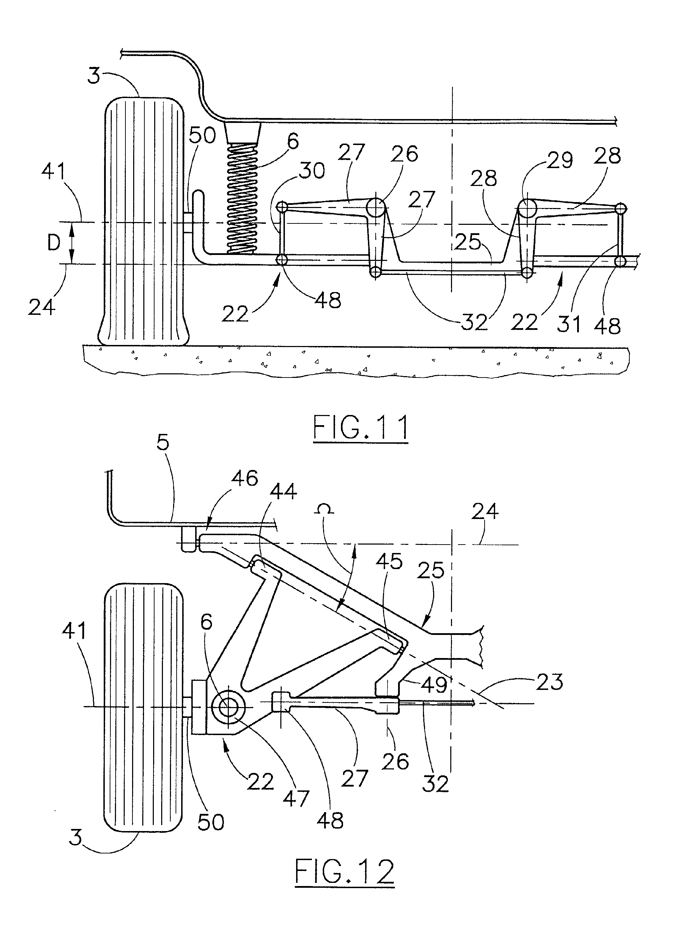

The inventive diagram of suspension is illustrated in Figures 11, 12 and 13.

Note that the system comprises, for each wheel 3, an oscillating arm 22, having a shape, which is basically similar to a Y, on whose point of convergency 47 the spring with shock absorber 6 acts, and a transversal bridge structure 25 on which the arm 22 is articulated.

The arm 22 has an axis of articulation 23 that intersects horizontally (in a coplanar or skew manner) the main axis 24, the latter called axis of attachment to the body. Said arm 22 is also connected to said wheel 3 by means of a hub 50.

The axis of articulation 23 of the arm 22 forms an angle Ω comprised between an interval of values from 20° to 80° with the axis of attachment 24 to the body 5.

The angular interval within which Ω varies is defined in function of the project specifications.

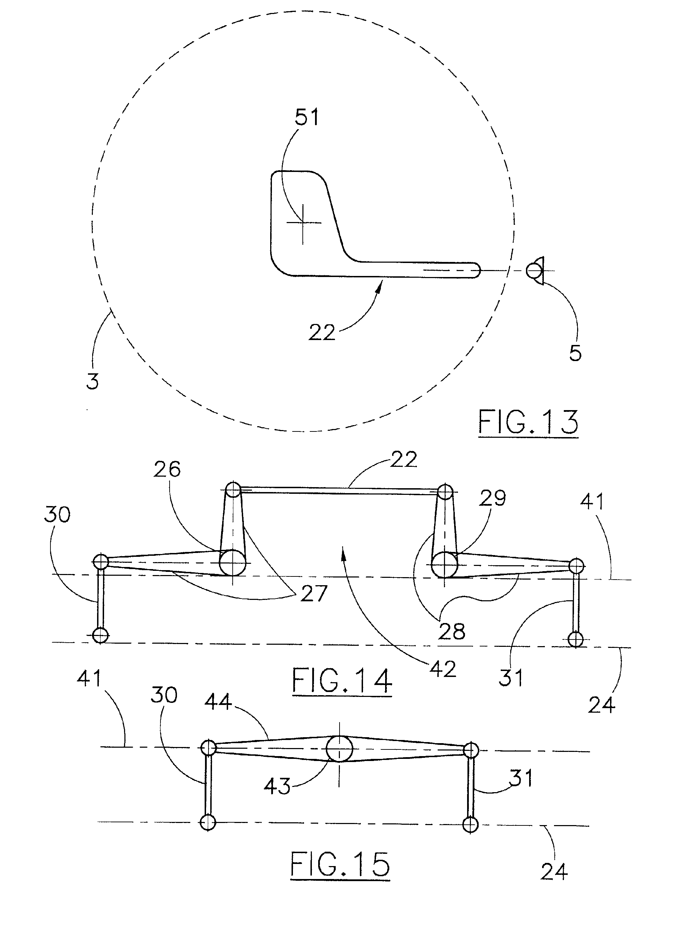

A side view of the arm of the suspension 22 with the attachment point 51 of the hub 50 of the wheel 3 is shown in figure 13.

The arm 22 is articulated to the transversal structure 25 by means of two articulation joints 44 and 45 placed at the extremities of its Y wings. The structure 25 in turn is articulated to the body 5 in a pair of connection points 46 that result as being the only points of contact with the body 5 of the suspension structure in accordance with the present invention.

The structure 25 carries out the functions of connection between the left oscillating arm 22 and the right oscillating arm (not represented in the figure) and of support of the left 26 and right 29 fulcrums (figure 11) on which the respective left 27 and right 28 rocking levers are articulated. Said rocking levers 27 and 28 control the reciprocal positions of the oscillating arms 22. As shown in figure 12 the fulcrum 26 is carried by a protruding part 49 of the structure 25; the same comes about symmetrically for the fulcrum 29.

The rocking levers 27 and 28 are activated only when the rolling angle is different from zero. If the rolling angle is null, said rocking levers 27 and 28 link the suspension in its complex to only one degree of freedom, that is they permit the suspension around the main axis 24, when only variations of vertical load are present.

Said rocking levers 27 and 28, in addition, by means of a pair of short connecting rods 30 and 31, connected at the anchoring points 48, and of a connecting rod 32 longer than said connecting rods 30 and 31, carry out the function of connecting said left 27 and right 28 arms. Note that said connecting rod 32 is positioned lower than wheel axis 41.

The distance between the axis of articulation 24 of the transversal structure 25 and the axis of the wheel 41 is defined as D, that is D defines how much the suspension and kinematic arrangement occupies in height.

In absence of rolling, that is for an angle γ equal to zero, there is no rotation around the axis of articulation 23 and therefore there are no variations of the angles of camber and convergency, that is if these angles are both equal to zero they remain so whatever the distance is of the motor vehicle from the ground in function of the load.

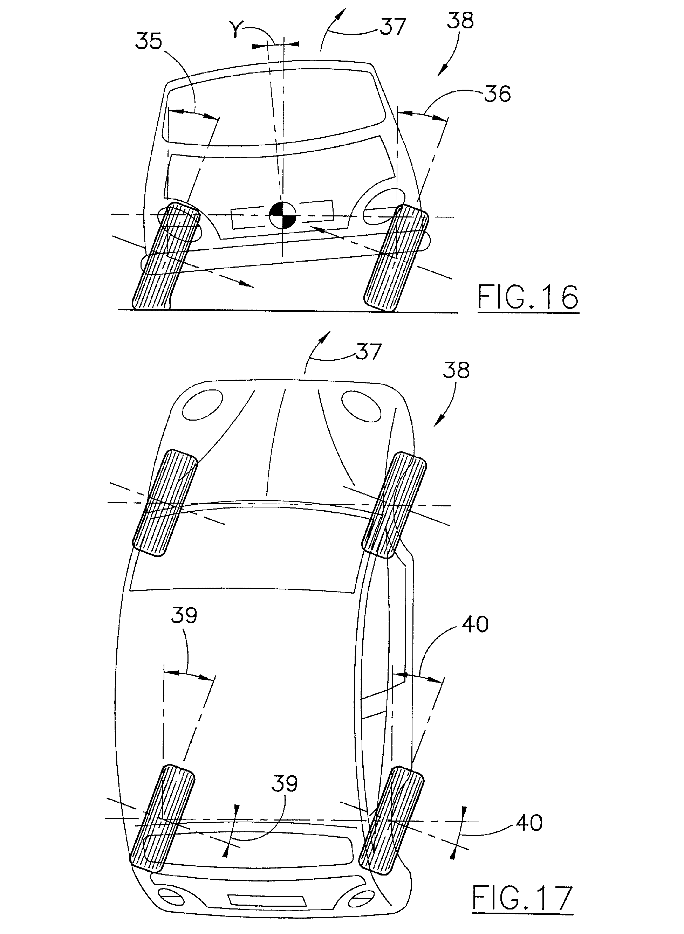

While in the event of rolling γ differing from zero, comprised for example between 0 ° and 4°, as shown in figure 16 and 17, we have values of the angles of camber and convergency gradually increasing in concordance, so that the wheel 3 approaches the body 5 by means of rotation around the axis of articulation 23, and the other wheel moves away an equivalent distance by effect of the connection to connecting rods 30, 31 and 32 and rocking levers 27 and 28.

In this manner both wheels of the rear axis have an understeering behavior, helping to improve the road-holding ability around curves. The embodiment thus illustrated is particularly indicated for a motor vehicle with front-wheel drive.

The inventive system also enables the tyre to work in optimal conditions.

In fact, as can be seen in figure 16, for a motor vehicle 38 moving in a direction indicated by the arrow 37, being therefore in the situation in which γ differs from zero, we have a negative angle of the camber 35 of the external wheel, in relation to the transversal axis of the motor vehicle, while we have a positive angle of the camber 36 of the internal wheel.

When γ is different from zero, with the direction of motion represented by the arrow 37, the angles of convergency assume positive values 39 and 40 for the internal and external wheels respectively, as illustrated in figure 17.

On the basis of the project choices said values of angles of convergency can be equal or not.

Another embodiment of the present invention is shown in figure 14, particularly for motor vehicles with rear-wheel drive, that is in the event a differential group occupies the central space.

According to what is illustrated in said figure it can be seen that the rocking levers 27 and 28, with the relative fulcrums 26 and 29, act so that said connecting rod 32 is positioned above said wheel axis 41 creating a space 42 capable of housing a differential group (not shown in the figure).

The axis of attachment 24 passes through the lower extremities of the short connecting rods 30 and 31.

Also in this embodiment, for a rolling angle γ different from zero, comprised for example between 0 ° and 4°, we have values of the angles of the camber and convergency gradually growing in concordance, so that the wheel 3 approaches the body 5 and the other wheel moves away an equivalent distance.

Another embodiment of the present invention is shown in Figure 15, particularly for motor vehicles with a small track.

According to what is illustrated in said figure it can be seen that different from the kinematic motions illustrated in the figures 11 and 14 the connecting rod 32 has been replaced by a simple rocking lever 44, with a single fulcrum point 43.

As can be noted, the wheel axis 41 passes through the fulcrum 43, while the axis of attachment 24 passes through the lower extremities of the short connecting rods 30 and 31.

In this manner the function carried out by the kinematic motion remains unaltered, that is for a rolling angle γ different from zero we have values of the angles of camber and convergency gradually growing in concordance, so that the wheel 3 approaches the body 5 and the other wheel moves away an equivalent distance, but the structure is particularly compact and is therefore indicated for motor vehicles with reduced track or axle base.

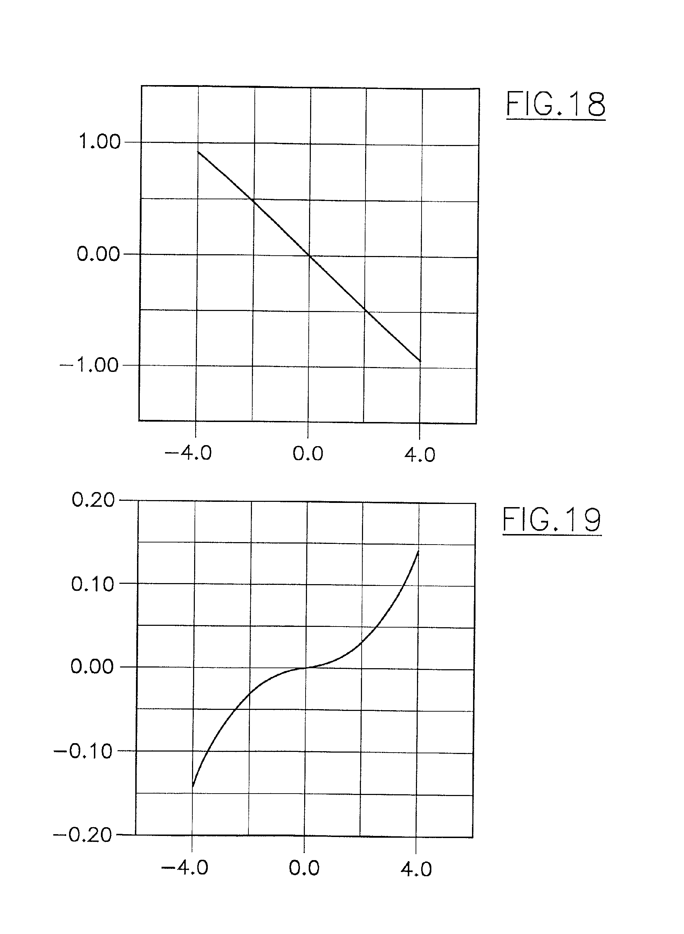

Figures 18 and 19 show two numerical simulations of the operating of the suspension according to the present invention, having as parameter a distance D = 50mm and an angle Ω = 56°.

In particular in figure 18 an x-axis indicating the rolling angle γ expressed in degrees, and a y-axis indicating the angle of the camber expressed in degrees can be noted. As can be inferred from said graph, the angle of the camber, whether it is positive or negative, has nearly a straight-line movement, that is it has a variation that is proportional with the rolling angle.

In fact, referring to Figure 16, for a positive variation of the angle γ comprised between 0° and 4°, the support wheel, that is the external wheel, acquires a negative angle of camber 35 comprised between -1° and 0°. At the same time the internal wheel acquires, thanks to one of the embodiments shown in Figures 11, 14 and 15, a positive angle of camber 36 comprised between 0° and 1°.

In particular in figure 19 an x-axis indicating the rolling angle γ expressed in degrees and a y-axis indicating the angle of convergency expressed in degrees can be noted. As can be inferred from said graph the angle of convergency, whether it is positive or negative, has a movement that is cubic with the rolling angle.

In fact, in referring to Figure 17, for a positive variation of the angle γ comprised between 0° and 4°, the support wheel, that is the external wheel, acquires an angle of convergency 39 comprised between 0° and 0.15°. At the same time the internal wheel acquires, thanks to one of the embodiments shown in Figures 11, 14 and 15, an angle of convergency 40 comprised between -0.15° and 0°.

It can be affirmed thus that the control of the two angles, the camber and convergency, suitable for controlling the understeering of the vehicle through the rear wheels also permits the increase of the course of the suspension by means of a rotation around the axis of articulation 24, the increase of the elasticity of the articulation bushings (not illustrated in the figure) to the body 5 thanks to a bigger axle base, obtaining greater comfort, and in addition said inventive suspension arrangement permits the use of more rigid articulation bushings of the arm 22 on the transversal structure 25, thus obtaining more precise driving and better road-holding abilities.

## Claims

1. Rear suspension for motor vehicles **characterized in that** it comprises a transversal bridge structure (25) fixed to the body (5) of the motor vehicle in an articulated manner along an attachment axis (24) and, for each wheel (3), an oscillating support arm (22) articulated to said transversal structure (25) by means of a pair of articulation joints (44, 45) which define for said oscillating arm (22) an axis of articulation (23) intersecting horizontally said axis of attachment (24) to the body (5), said oscillating arms (22) being connected to each other by a connecting rods structure (30, 31, 32) and rocking levers (27, 28) supported by said transversal structure (25) and made so that every variation of the camber and/or convergency of a wheel (3) in presence of rolling (γ) entails a similar variation of convergency and camber of the other wheel (3).

2. Rear suspension for motor vehicles according to claim 1, **characterized in that** the axis of articulation (23) of said oscillating arm (22) forms an angle Ω comprised in an interval between 20° and 80° with the axis of attachment (24) to the body (5).

3. Rear suspension for motor vehicles according to claim 1, **characterized in that** said oscillating arm (22) has a Y shape, with two diverging wings comprising said articulation joints (44, 45) and a point of convergency linked to the wheel (3).

4. Rear suspension for motor vehicles according to claim 1, **characterized in that** said system of connecting rods (30, 31, 32) and rocking levers (27, 28) comprises a pair of rocking levers (27, 28) with a fulcrum point (26, 29) on said transversal structure (25), a connecting rod (32) between said rocking levers (27, 28) and connecting rods (30, 31) between said rocking levers (27, 28) and said oscillating arms (22).

5. Rear suspension for motor vehicles according to claim 4, **characterized in that** said transversal bridge structure (25) possesses protruding parts (49) which carry said fulcrums (26, 29).

6. Rear suspension for motor vehicles according to claim 4, **characterized in that** said connecting rod (32) is positioned above the wheel axis (41).

7. Rear suspension for motor vehicles according to claim 4, **characterized in that** said connecting rod (32) is positioned below the wheel axis (41).

8. Rear suspension for motor vehicles according to claim 1, **characterized in that** said system of connecting rods and rocking levers comprises one single rocking lever (44), with a single point of fulcrum (43) on said transversal structure (25), in which a pair of connecting rods (30, 31) is articulated as connection between said rocking lever (44) and said oscillating arms (22).
